(19) **Europäisches Patentamt**
**European Patent Office**
**Office européen des brevets**

(11) **EP 2 949 882 B1**

(12) **EUROPEAN PATENT SPECIFICATION**

(45) Date of publication and mention
of the grant of the patent:
**23.08.2017 Bulletin 2017/34**

(51) Int Cl.:
*F02K 3/06* (2006.01)  *F02C 7/36* (2006.01)
*F01D 25/16* (2006.01)

(21) Application number: **15175205.2**

(22) Date of filing: **17.02.2014**

(54) **GEARED ARCHITECTURE FOR HIGH SPEED AND SMALL VOLUME FAN DRIVE TURBINE**

GETRIEBEARCHITEKTUR FÜR DEN BLÄSERANTRIEB MITTELS EINER KLEINVOLUMIGEN UND MIT HOCHGESCHWINDIGKEIT LAUFENDER TURBINE

ARCHITECTURE A ENGRENAGES POUR L'ENTRAINEMENT D'UNE SOUFFLANTE PAR UNE TURBINE DE PETIT VOLUME ET GRANDE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2013 US 201313908177**

(43) Date of publication of application:
**02.12.2015 Bulletin 2015/49**

(62) Document number(s) of the earlier application(s) in accordance with Art. 76 EPC:
**14155460.0 / 2 811 120**

(73) Proprietor: **United Technologies Corporation Farmington, CT 06032 (US)**

(72) Inventors:
 • **McCUNE, Michael E.**
 **Colchester, CT Connecticut 06415 (US)**
 • **HUSBAND, Jason**
 **South Glastonbury, CT Connecticut 06073 (US)**
 • **SCHWARZ, Frederick M.**
 **Glastonbury, CT Connecticut 06033 (US)**

 • **KUPRATIS, Daniel Bernard**
 **Wallingford, CT Connecticut 06492 (US)**
 • **SUCIU, Gabriel L.**
 **Glastonbury, CT Connecticut 06033 (US)**
 • **ACKERMANN, William K.**
 **East Hartford, CT Connecticut 06118 (US)**

(74) Representative: **Hull, James Edward Dehns St. Bride's House 10 Salisbury Square London EC4Y 8JD (GB)**

(56) References cited:
**EP-A2- 2 532 841  WO-A1-2014/047040**

 • Dale Rauch: "DESIGN STUDY OF AN AIR PUMP AND INTEGRAL LIFT ENGINE ALF-504 USING THE LYCOMING 502 CORE", NASA Report CR-120992, 31 July 1972 (1972-07-31), XP055273059, Retrieved from the Internet: URL:http://ntrs.nasa.gov/archive/nasa/casi .ntrs .nasa.gov/19730004744.pdf [retrieved on 2016-05-17]

**Description**

**BACKGROUND**

The present disclosure relates to a method of operating a gas turbine engine having a flexible support structure for a geared architecture thereof.

Epicyclic gearboxes with planetary or star gear trains may be used in gas turbine engines for their compact designs and efficient high gear reduction capabilities. Planetary and star gear trains generally include three gear train elements: a central sun gear, an outer ring gear with internal gear teeth, and a plurality of planet gears supported by a planet carrier between and in meshed engagement with both the sun gear and the ring gear. The gear train elements share a common longitudinal central axis, about which at least two rotate. An advantage of epicyclic gear trains is that a rotary input can be connected to any one of the three elements. One of the other two elements is then held stationary with respect to the other two to permit the third to serve as an output.

In gas turbine engine applications, where a speed reduction transmission is required, the central sun gear generally receives rotary input from the power plant, the outer ring gear is generally held stationary and the planet gear carrier rotates in the same direction as the sun gear to provide torque output at a reduced rotational speed. In star gear trains, the planet carrier is held stationary and the output shaft is driven by the ring gear in a direction opposite that of the sun gear.

During flight, lightweight structural cases deflect with aero and maneuver loads causing significant amounts of transverse deflection commonly known as backbone bending of the engine. This deflection may cause the individual sun or planet gear's axis of rotation to lose parallelism with the central axis. This deflection may result in some misalignment at gear train journal bearings and at the gear teeth mesh, which may lead to efficiency losses from the misalignment and potential reduced life from increases in the concentrated stresses.

Further, with the geared architecture as set forth above, the torque and speed of the input into the gear is quite high.

A prior art engine is disclosed in EP-2532841.

SUMMARY

According to the present invention, there is provided a method of operating a gas turbine engine as claimed in claim 1.

The first turbine section may be a low pressure turbine section and the second turbine section may be a high pressure turbine section.

In another embodiment according to the previous embodiment, the first ratio is above or equal to 1.0.

In another embodiment according to any of the previous embodiments, the first turbine section has at least three stages.

In another embodiment according to any of the previous embodiments, the first turbine section has up to six stages.

In another embodiment according to any of the previous embodiments, the second turbine section has two stages.

In another embodiment according to any of the previous embodiments, a pressure ratio across the first turbine section is greater than 5:1.

In another embodiment according to any of the previous embodiments, the frame defines a frame lateral stiffness and a frame transverse stiffness. The flexible support defines a flexible support transverse stiffness and a flexible support lateral stiffness. The flexible support lateral stiffness is less than the frame lateral stiffness and the flexible support transverse stiffness is less than the frame transverse stiffness.

In another embodiment according to any of the previous embodiments, the inlet coupling has an inlet coupling lateral stiffness and an inlet coupling transverse stiffness. The inlet coupling lateral stiffness is less than the frame lateral stiffness. The inlet coupling transverse stiffness is less than the frame transverse stiffness.

In another embodiment according to any of the previous embodiments, the plurality of gears include a gear mesh that defines a gear mesh lateral stiffness and a gear mesh transverse stiffness. The gear mesh lateral stiffness is greater than the flexible support lateral stiffness. The gear mesh transverse stiffness is greater than the flexible support transverse stiffness.

In another embodiment according to the previous embodiment, the second ratio is greater than or equal to 2.0 (lbf/inch$^3$ (542.9 kN/m$^3$).

In another embodiment according to any of the previous embodiments, the second ratio is greater than or equal to 4.0 (lbf/inch$^3$ (1086 kN/m$^3$).

## BRIEF DESCRIPTION OF THE DRAWINGS

Various features will become apparent to those skilled in the art from the following detailed description of the disclosed non-limiting embodiment. The drawings that accompany the detailed description can be briefly described as follows:

Figure 1A is a schematic cross-section of a gas turbine engine;
Figure 1B shows a feature of the Figure 1A engine.
Figure 1C shows another feature.
Figure 1D shows yet another feature.
Figure 2 is an enlarged cross-section of a section of the gas turbine engine which illustrates a fan drive gear system (FDGS);
Figure 3 is a schematic view of a flex mount arrangement for one non-limiting embodiment of the FDGS;
Figure 4 is a schematic view of a flex mount arrangement for another non-limiting embodiment of the FDGS;
Figure 5 is a schematic view of a flex mount arrangement for another non-limiting embodiment of a star system FDGS; and
Figure 6 is a schematic view of a flex mount arrangement for another non-limiting embodiment of a planetary system FDGS.
Figure 7 is a schematic view of a flex mount arrangement for another non-limiting embodiment of a star system FDGS; and
Figure 8 is a schematic view of a flex mount arrangement for another non-limiting embodiment of a planetary system FDGS.

## DETAILED DESCRIPTION

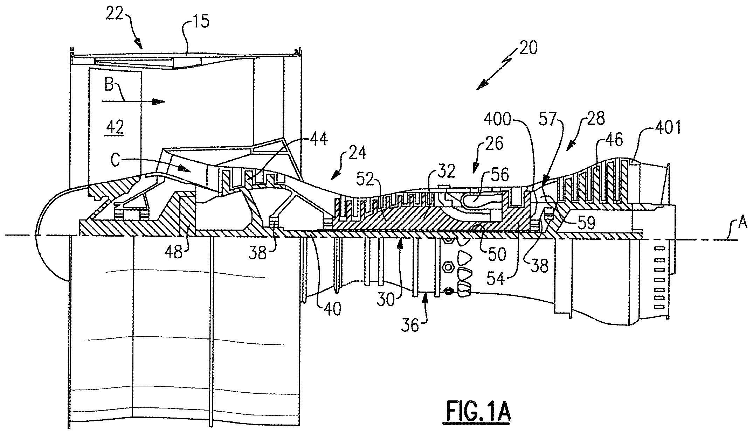

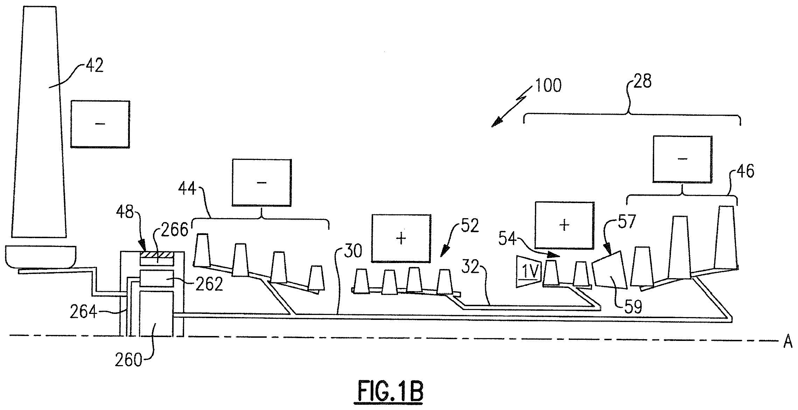

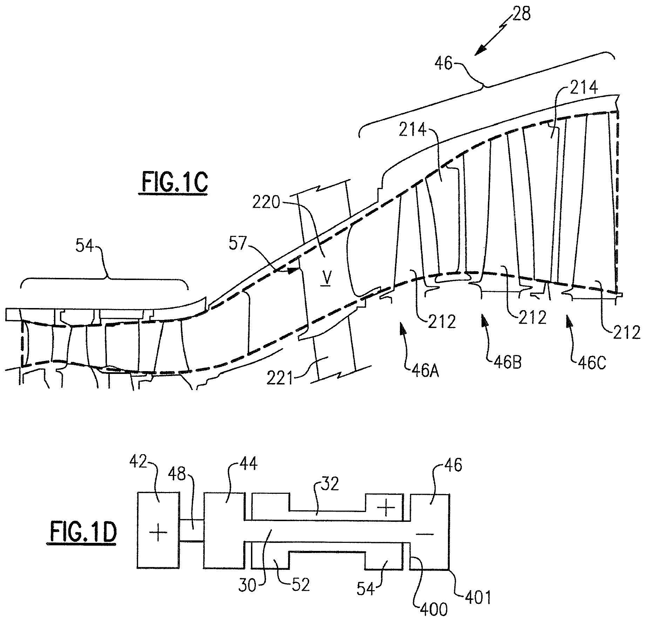

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 60 may be varied. For example, gear system 60 may be located aft of combustor section 26 or even aft of turbine section 28, and fan section 22 may be positioned forward or aft of the location of gear system 60. The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1).

In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,670 metres). The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of $[(Tram \, °R) / (518.7 \, °R)]^{0.5}$ (where °R = °K x 9/5). The "Low corrected fan tip speed" as disclosed herein according to one non-limiting embodiment is less than about 1150 ft / second (350.5 m/s).

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion of the airflow passing therethrough.

The amount of thrust that can be produced by a particular turbine section compared to how compact the turbine section is, is referred to as the power density, or the force density, of the turbine section, and is derived by the flat-rated Sea Level Take-Off (SLTO) thrust divided by the volume of the entire turbine section. The example volume is determined from an inlet of the high pressure turbine 54 to an exit of the low pressure turbine 46. In order to increase the power density of the turbine section 28, each of the low pressure and high pressure turbines 46, 54 is made more compact. That is, the high pressure turbine 54 and the low pressure turbine 46 are made with a shorter axial length, and the spacing between each of the turbines 46, 54 is decreased, thereby decreasing the volume of the turbine section 28.

The power density in the disclosed gas turbine engine 20 including the gear driven fan section 22 is greater than those provided in prior art gas turbine engine including a gear driven fan. Eight disclosed exemplary engines, which incorporate turbine sections and fan sections driven through a reduction gear system and architectures as set forth in this application, are described in Table I as follows (where, 1 lbf = 4.448 N, 1 inch = 2.54 cm and 1 lbf/in$^3$ = 271.4 kN/m$^3$):

TABLE 1

| Engine | Thrust SLTO (lbf) | Turbine section volume from the Inlet | Thrust/turbine section volume (lbf/in$^3$) |
|---|---|---|---|
| 1 | 17,000 | 3,859 | 4.4 |
| 2 | 23,300 | 5,330 | 4.37 |
| 3 | 29,500 | 6,745 | 4.37 |
| 4 | 33,000 | 6,745 | 4.84 |
| 5 | 96,500 | 31,086 | 3.1 |
| 6 | 96,500 | 62,172 | 1.55 |
| 7 | 96,500 | 46,629 | 2.07 |
| 8 | 37,098 | 6,745 | 5.50 |

The power density is greater than or equal to about 1.5 lbf/in$^3$ (407.1 kN/m$^3$). In further embodiments, the power density is greater than or equal to about 2.0 lbf /in$^3$ (542.9 kN/m$^3$). In further embodiments, the power density is greater than or equal to about 3.0 lbf/in$^3$ (814.3 kN/m$^3$). In further embodiments, the power density is greater than or equal to about 4.0 lbf/in$^3$ (1086 kN/m$^3$). The power density is less than or equal to about 5.5 lbf/in$^3$ (1493 kN/m$^3$).

Engines made with the disclosed gear driven fan architecture, and including turbine sections as set forth in this application, provide very high efficiency operation, and increased fuel efficiency.

Referring to Figure 1B, with continued reference to Figure 1A, relative rotations between components of example disclosed engine architecture 100 are schematically shown. In the example engine architecture 100, the fan 42 is connected, through the gearbox, to the low spool 30 to which the low pressure compressor 44 and the low pressure turbine 46 are connected. The high pressure compressor 52 and the high pressure turbine 54 are connected to a common shaft forming the high spool 32. The high spool 32 rotates opposite the direction of rotation of the fan 42 (illustrated in Figure 1B as the "+" direction.) The low spool 30 rotates in the same direction as the fan 42 (illustrated in Figure 1B as the "-" direction.) The high pressure turbine 54 and the low pressure turbine 46, along with the mid-turbine frame 57 together forms the turbine section 28 of the gas turbine engine 20. Other relative rotation directions between the two spools and the fan come within the scope of this disclosure.

One disclosed example speed change device 48 has a gear reduction ratio exceeding 2.3:1, meaning that the low pressure turbine 46 turns at least 2.3 times faster than the fan 42. An example disclosed speed change device is an epicyclical gearbox of a planet type, where the input is to the center "sun" gear 260. Planet gears 262 (only one shown) around the sun gear 260 rotate and are spaced apart by a carrier 264 that rotates in a direction common to the sun gear 260. A ring gear 266, which is non-rotatably fixed to the engine static casing 36 (shown in Figure 1), contains the entire gear assembly. The fan 42 is attached to and driven by the carrier 264 such that the direction of rotation of the fan 42 is the same as the direction of rotation of the carrier 264 that, in turn, is the same as the direction of rotation of the input sun gear 260. Accordingly, the low pressure compressor 44 and the low pressure turbine 46 counter-rotate relative to the high pressure compressor 52 and the high pressure turbine 54.

Counter rotating the low pressure compressor 44 and the low pressure turbine 46 relative to the high pressure compressor 52 and the high pressure turbine 54 provides certain efficient aerodynamic conditions in the turbine section 28 as the generated high speed exhaust gas flow moves from the high pressure turbine 54 to the low pressure turbine 46. Moreover, the mid-turbine frame 57 contributes to the overall compactness of the turbine section 28. Further, the airfoil 59 of the mid-turbine frame 57 surrounds internal bearing support structures and oil tubes that are cooled. The airfoil 59 also directs flow around the internal bearing support structures and oil tubes for streamlining the high speed exhaust gas flow. Additionally, the airfoil 59 directs flow exiting the high pressure turbine 54 to a proper angle desired to promote increased efficiency of the low pressure turbine 46.

Flow exiting the high pressure turbine 54 has a significant component of tangential swirl. The flow direction exiting the high pressure turbine 54 is set almost ideally for the blades in a first stage of the low pressure turbine 46 for a wide range of engine power settings. Thus, the aerodynamic turning function of the mid turbine frame 57 can be efficiently achieved without dramatic additional alignment of airflow exiting the high pressure turbine 54.

Referring to Figure 1C, the example turbine section 28 volume is schematically shown and includes first, second and third stages 46A, 46B and 46C. Each of the stages 46A, 46B and 46C includes a corresponding plurality of blades 212 and vanes 214. The example turbine section further includes an example air-turning vane 220 between the low and high turbines 54, 46 that has a modest camber to provide a small degree of redirection and achieve a desired flow angle relative to blades 212 of the first stage 46a of the low pressure turbine 46. The disclosed vane 220 could not efficiently perform the desired airflow function if the low and high pressure turbines 54, 46 rotated in a common direction.

The example mid-turbine frame 57 includes multiple air turning vanes 220 in a row that direct air flow exiting the high pressure turbine 54 and ensure that air is flowing in the proper direction and with the proper amount of swirl. Because the disclosed turbine section 28 is more compact than previously utilized turbine sections, air has less distance to travel between exiting the mid-turbine frame 57 and entering the low pressure turbine 46. The smaller axial travel distance results in a decrease in the amount of swirl lost by the airflow during the transition from the mid-turbine frame 57 to the low pressure turbine 46, and allows the vanes 220 of the mid-turbine frame 57 to function as inlet guide vanes of the low pressure turbine 46. The mid-turbine frame 57 also includes a strut 221 providing structural support to both the mid-turbine frame 57 and to the engine housing. In one example, the mid-turbine frame 57 is much more compact by encasing the strut 221 within the vane 220, thereby decreasing the length of the mid-turbine frame 57.

At a given fan tip speed and thrust level provided by a given fan size, the inclusion of the speed change device 48 (shown in Figures 1A and 1B) provides a gear reduction ratio, and thus the speed of the low pressure turbine 46 and low pressure compressor 44 components may be increased. More specifically, for a given fan diameter and fan tip speed, increases in gear ratios provide for a faster turning turbine that, in turn, provides for an increasingly compact turbine and increased thrust to volume ratios of the turbine section 28. By increasing the gear reduction ratio, the speed at which the low pressure compressor 44 and the low pressure turbine 46 turn, relative to the speed of the fan 42, is increased.

Increases in rotational speeds of the gas turbine engine 20 components increases overall efficiency, thereby providing for reductions in the diameter and the number of stages of the low pressure compressor 44 and the low pressure turbine 46 that would otherwise be required to maintain desired flow characteristics of the air flowing through the core flow path C. The axial length of each of the low pressure compressor 44 and the low pressure turbine 46 can therefore be further reduced due to efficiencies gained from increased speed provided by an increased gear ratio. Moreover, the reduction in the diameter and the stage count of the turbine section 28 increases the compactness and provides for an overall decrease in required axial length of the example gas turbine engine 20.

In order to further improve the thrust density of the gas turbine engine 20, the example turbine section 28 (including the high pressure turbine 54, the mid-turbine frame 57, and the low pressure turbine 46) is made more compact than traditional turbine engine designs, thereby decreasing the length of the turbine section 28 and the overall length of the gas turbine engine 20.

In order to make the example low pressure turbine 46 compact, make the diameter of the low pressure turbine 46 more compatible with the high pressure turbine 54, and thereby make the air-turning vane 220 of the mid-turbine frame 57 practical, stronger materials in the initial stages of the low pressure turbine 46 may be required. The speeds and centrifugal pull generated at the compact diameter of the low pressure turbine 46 pose a challenge to materials used in prior art low pressure turbines.

Examples of materials and processes within the contemplation of this disclosure for the air-turning vane 220, the low pressure turbine blades 212, and the vanes 214 include materials with directionally solidified grains to provided added strength in a span-wise direction. An example method for creating a vane 220, 214 or turbine blade 212 having directionally solidified grains can be found in U.S. Applications No. 13/290667, and U.S. Patent Nos. 7338259 and 7871247. A further, engine embodiment utilizes a cast, hollow blade 212 or vane 214 with cooling air introduced at the leading edge of the blade/vane and a trailing edge discharge of the cooling air. Another embodiment uses an internally cooled blade 212 or vane 214 with film cooling holes. An additional engine embodiment utilizes an aluminum lithium material for construction of a portion of the low pressure turbine 46. The example low pressure turbine 46 may also be constructed utilizing at a powdered metal disc or rotor.

Additionally, one or more rows of turbine blades 212 of the low pressure turbine 46 can be constructed using a single crystal blade material. Single crystal constructions oxidize at higher temperatures as compared to non-single crystal constructions and thus can withstand higher temperature airflow. Higher temperature capability of the turbine blades 212 provide for a more efficient low pressure turbine 46 that may be further reduced in size.

While the illustrated low pressure turbine 46 includes three turbine stages 46a, 46b, and 46c, the low pressure turbine 46 can be modified to include up to six turbine stages. Increasing the number of low pressure turbine stages 46a, 46b, 46c at constant thrust slightly reduces the thrust density of the turbine section 28 but also increases power available to drive the low pressure compressor and the fan section 22.

Further, the example turbine blades may be internally cooled to allow the material to retain a desired strength at higher temperatures and thereby perform as desired in view of the increased centrifugal force generated by the compact configuration while also withstanding the higher temperatures created by adding low pressure compressor 44 stages and increasing fan tip diameter.

Each of the disclosed embodiments enables the low pressure turbine 46 to be more compact and efficient, while also improving radial alignment to the high pressure turbine 54. Improved radial alignment between the low and high pressure turbines 54, 46 increases efficiencies that can offset any increases in manufacturing costs incurred by including the air turning vane 220 of the mid-turbine frame 57.

In light of the foregoing embodiments, the overall size of the turbine section 28 has been greatly reduced, thereby enhancing the engine's power density. Further, as a result of the improvement in power density, the engine's overall propulsive efficiency has been improved.

An exit area 400 is shown, in Figure 1D and Figure 1A, at the exit location for the high pressure turbine section 54. An exit area for the low pressure turbine section is defined at exit 401 for the low pressure turbine section. As shown in Figure 1D, the turbine engine 20 may be counter-rotating. This means that the low pressure turbine section 46 and low pressure compressor section 44 rotate in one direction, while the high pressure spool 32, including high pressure turbine section 54 and high pressure compressor section 52 rotate in an opposed direction. The gear reduction 48, which may be, for example, an epicyclic transmission (e.g., with a sun, ring, and star gears), is selected such that the fan 42 rotates in the same direction as the high spool 32. With this arrangement, and with the other structure as set forth above, including the various quantities and operational ranges, a very high speed can be provided to the low pressure spool. Low pressure turbine section and high pressure turbine section operation are often evaluated looking at a performance quantity which is the exit area for the turbine section multiplied by its respective speed squared. This performance quantity ("PQ") is defined as:

$$Equation\ 1: \quad PQ_{ltp} = (A_{lpt} \times V_{lpt}^{2})$$

$$Equation\ 2: \quad PQ_{hpt} = (A_{hpt} \times V_{hpt}^{2})$$

where $A_{lpt}$ is the area of the low pressure turbine section at the exit thereof (e.g., at 401), where $V_{lpt}$ is the speed of the low pressure turbine section, where $A_{hpt}$ is the area of the high pressure turbine section at the exit thereof (e.g., at 400), and where $V_{hpt}$ is the speed of the low pressure turbine section.

Thus, a ratio of the performance quantity for the low pressure turbine section compared to the performance quantify for the high pressure turbine section is:

$$\textit{Equation 3:} \quad (A_{lpt} \times V_{lpt}{}^2)/(A_{hpt} \times V_{hpt}{}^2) = PQ_{ltp}/\, PQ_{hpt}$$

In one turbine embodiment made according to the above design, the areas of the low and high pressure turbine sections are 557.9 in (3,599 cm$^2$) and 90.67 in (585 cm$^2$), respectively. Further, the speeds of the low and high pressure turbine sections are 10179 rpm and 24346 rpm, respectively. Thus, using Equations 1 and 2 above, the performance quantities for the low and high pressure turbine sections are:

$$\textit{Equation 1:} \quad PQ_{ltp} = (A_{lpt} \times V_{lpt}{}^2) = (557.9 \text{ in}^2)(10179 \text{ rpm})^2 =$$
$$57805157673.9 \text{ in}^2 \text{ rpm}^2 (372.9 \times 10^9 \text{ cm}^2 \text{ rpm}^2)$$

$$\textit{Equation 2:} \quad PQ_{hpt} = (A_{hpt} \times V_{hpt}{}^2) = (90.67 \text{ in}^2)(24346 \text{ rpm})^2 =$$
$$53742622009.72 \text{ in}^2 \text{ rpm}^2 (346.7 \times 10^9 \text{ cm}^2 \text{ rpm}^2)$$

and using Equation 3 above, the ratio for the low pressure turbine section to the high pressure turbine section is:

$$\textit{Ratio} = PQ_{ltp}/\, PQ_{hpt} = 57805157673.9 \text{ in}^2 \text{ rpm}^2 / 53742622009.72 \text{ in}^2 \text{ rpm}^2 =$$
$$1.075$$

In another embodiment, the ratio was about 1.5. With $PQ_{ltp}/PQ_{hpt}$ ratios in the 0.5 to 1.5 range, a very efficient overall gas turbine engine is achieved. More narrowly, $PQ_{ltp}/PQ_{hpt}$ ratios of above or equal to about 0.8 are more efficient. Even above or equal to about 0.8 are more efficient. Even more narrowly, $PQ_{ltp}/PQ_{hpt}$ ratios above or equal to 1.0 are even more efficient. As a result of these $PQ_{ltp}/PQ_{hpt}$ ratios, in particular, the turbine section can be made much smaller than in the prior art, both in diameter and axial length. In addition, the efficiency of the overall engine is greatly increased.

The low pressure compressor section is also improved with this arrangement, and behaves more like a high pressure compressor section than a traditional low pressure compressor section. It is more efficient than the prior art, and can provide more work in fewer stages. The low pressure compressor section may be made smaller in radius and shorter in length while contributing more toward achieving the overall pressure ratio design target of the engine.

A worker of ordinary skill in the art, being apprised of the disclosure above, would recognize that high torque and high speed will be presented by the low speed spool 30 into the gear architecture 48. Thus, a flexible mount arrangement becomes important.

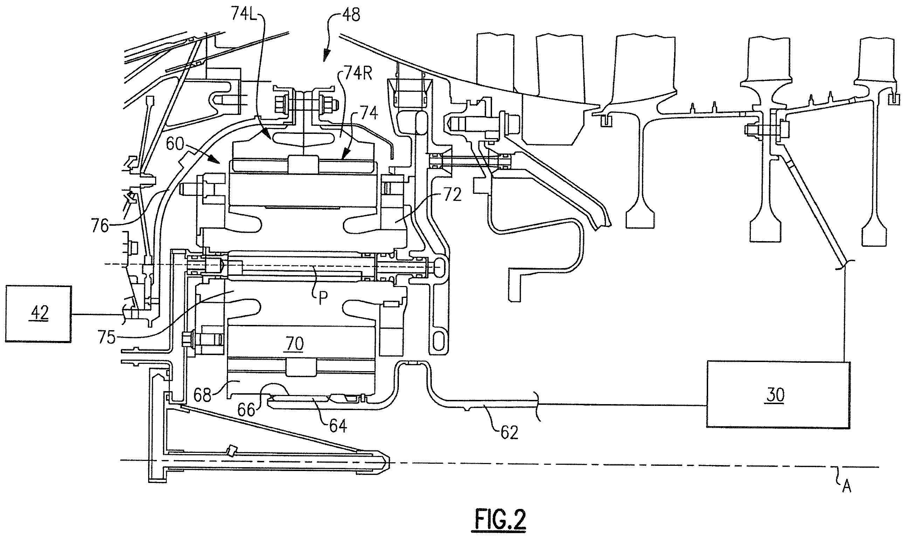

With reference to Figure 2, the geared architecture 48 generally includes a fan drive gear system (FDGS) 60 driven by the low speed spool 30 (illustrated schematically) through an input coupling 62. The input coupling 62 both transfers torque from the low speed spool 30 to the geared architecture 48 and facilitates the segregation of vibrations and other transients therebetween. In the disclosed non-limiting embodiment, the FDGS 60 may include an epicyclic gear system which may be, for example, a star system or a planet system.

The input coupling 62 may include an interface spline 64 joined, by a gear spline 66, to a sun gear 68 of the FDGS 60. The sun gear 68 is in meshed engagement with multiple planet gears 70, of which the illustrated planet gear 70 is representative. Each planet gear 70 is rotatably mounted in a planet carrier 72 by a respective planet journal bearing 75. Rotary motion of the sun gear 68 urges each planet gear 70 to rotate about a respective longitudinal axis P. The gears may be generally as shown schematically in Figure 1B.

Each planet gear 70 is also in meshed engagement with rotating ring gear 74 that is mechanically connected to a fan shaft 76. Since the planet gears 70 mesh with both the rotating ring gear 74 as well as the rotating sun gear 68, the planet gears 70 rotate about their own axes to drive the ring gear 74 to rotate about engine axis A. The rotation of the ring gear 74 is conveyed to the fan 42 (Figure 1) through the fan shaft 76 to thereby drive the fan 42 at a lower speed than the low speed spool 30. It should be understood that the described geared architecture 48 is but a single non-limiting embodiment and that various other geared architectures will alternatively benefit herefrom.

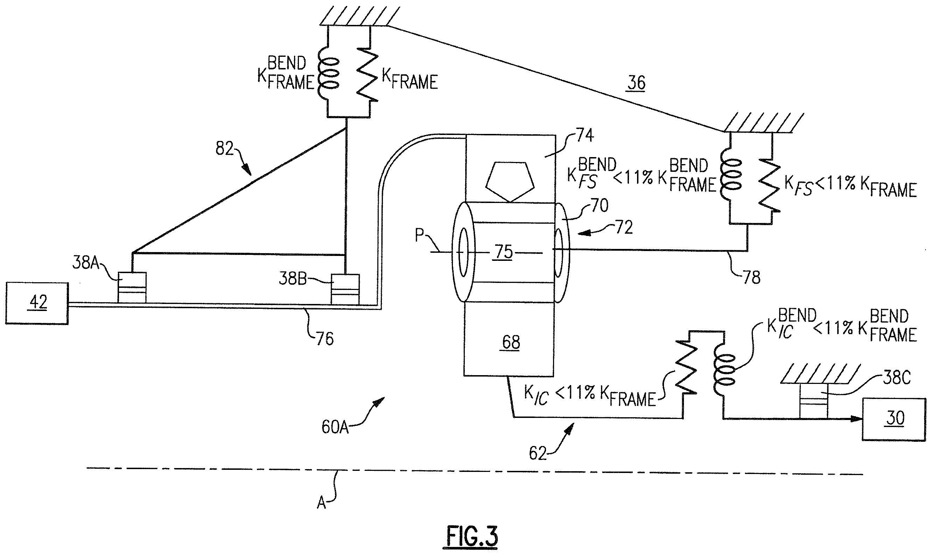

With reference to Figure 3, a flexible support 78 supports the planet carrier 72 to at least partially support the FDGS 60A with respect to the static structure 36 such as a front center body which facilitates the segregation of vibrations and other transients therebetween. It should be understood that various gas turbine engine case structures may alternatively or additionally provide the static structure and flexible support 78. It is to be understood that the term "lateral" as used herein refers to a perpendicular direction with respect to the axis of rotation A and the term "transverse" refers to a pivotal bending movement with respect to the axis of rotation A so as to absorb deflections which may be otherwise applied to the FDGS 60. The static structure 36 may further include a number 1 and 1.5 bearing support static structure 82 which is commonly referred to as a "K-frame" which supports the number 1 and number 1.5 bearing systems 38A. 38B. Notably, the K-frame bearing support defines a lateral stiffness (represented as Kframe in Figure 3) and a transverse stiffness (represented as Kframe$^{BEND}$ in Figure 3) as the referenced factors in this non-limiting embodiment.

In this disclosed non-limiting embodiment, the lateral stiffness (KFS; KIC) of both the flexible support 78 and the input coupling 62 are each less than about 11% of the lateral stiffness (Kframe). That is, the lateral stiffness of the entire FDGS 60 is controlled by this lateral stiffness relationship. Alternatively, or in addition to this relationship, the transverse stiffness of both the flexible support 78 and the input coupling 62 are each less than about 11% of the transverse stiffness (Kframe$^{BEND}$). That is, the transverse stiffness of the entire FDGS 60 is controlled by this transverse stiffness relationship.

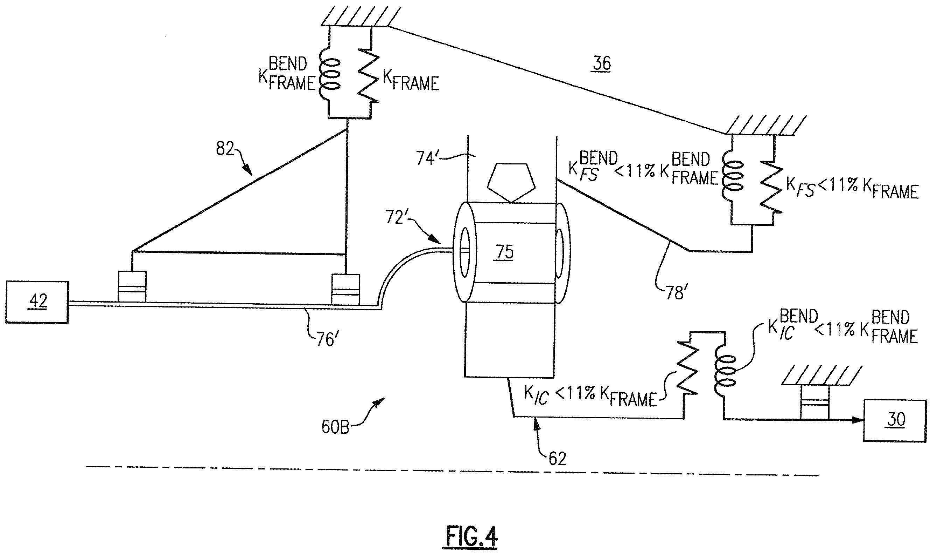

With reference to Figure 4, another non-limiting embodiment of a FDGS 60B includes a flexible support 78' that supports a rotationally fixed ring gear 74'. The fan shaft 76' is driven by the planet carrier 72' in the schematically illustrated planet system which otherwise generally follows the star system architecture of Figure 3.

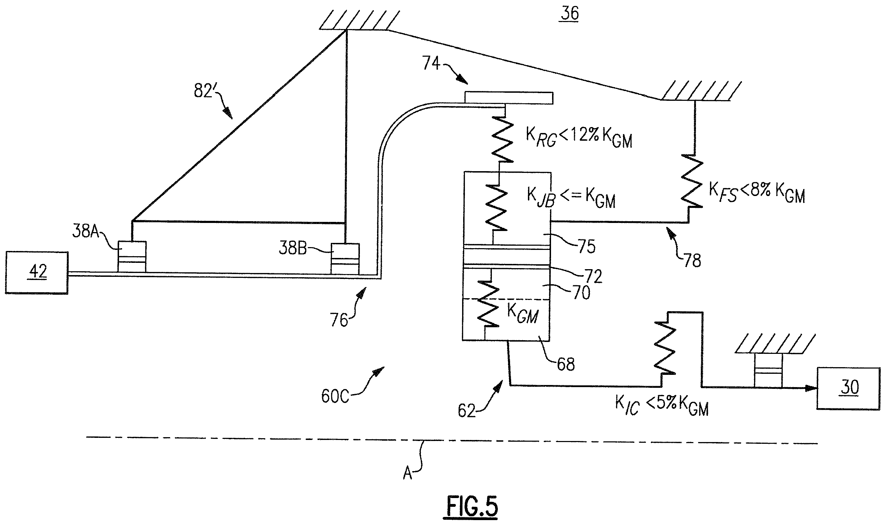

With reference to Figure 5, the lateral stiffness relationship within a FDGS 60C itself (for a star system architecture) is schematically represented. The lateral stiffness (KIC) of an input coupling 62, a lateral stiffness (KFS) of a flexible support 78, a lateral stiffness (KRG) of a ring gear 74 and a lateral stiffness (KJB) of a planet journal bearing 75 are controlled with respect to a lateral stiffness (KGM) of a gear mesh within the FDGS 60.

In the disclosed non-limiting embodiment, the stiffness (KGM) may be defined by the gear mesh between the sun gear 68 and the multiple planet gears 70. The lateral stiffness (KGM) within the FDGS 60 is the referenced factor and the static structure 82' rigidly supports the fan shaft 76. That is, the fan shaft 76 is supported upon bearing systems 38A, 38B which are essentially rigidly supported by the static structure 82'. The lateral stiffness (KJB) may be mechanically defined by, for example, the stiffness within the planet journal bearing 75 and the lateral stiffness (KRG) of the ring gear 74 may be mechanically defined by, for example, the geometry of the ring gear wings 74L, 74R (Figure 2).

In the disclosed non-limiting embodiment, the lateral stiffness (KRG) of the ring gear 74 is less than about 12% of the lateral stiffness (KGM) of the gear mesh; the lateral stiffness (KFS) of the flexible support 78 is less than about 8% of the lateral stiffness (KGM) of the gear mesh; the lateral stiffness (KJB) of the planet journal bearing 75 is less than or equal to the lateral stiffness (KGM) of the gear mesh; and the lateral stiffness (KIC) of an input coupling 62 is less than about 5% of the lateral stiffness (KGM) of the gear mesh.

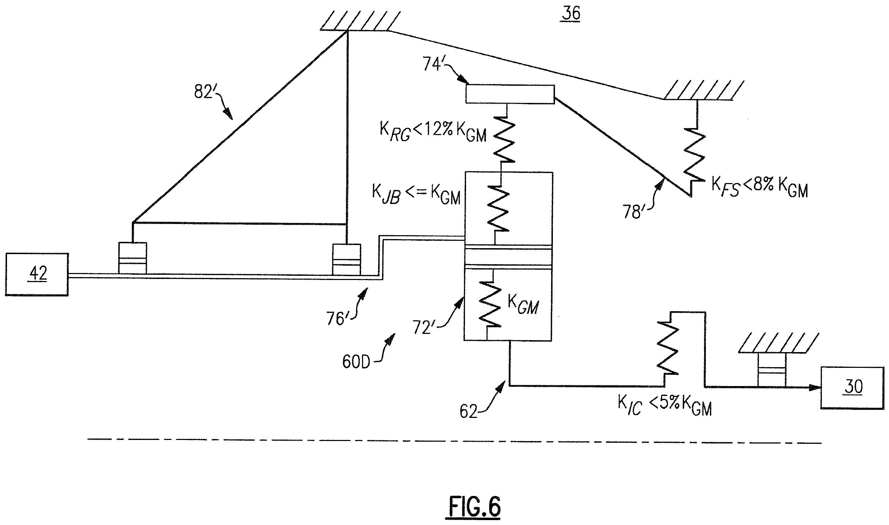

With reference to Figure 6, another non-limiting embodiment of a lateral stiffness relationship within a FDGS 60D itself are schematically illustrated for a planetary gear system architecture, which otherwise generally follows the star system architecture of Figure 5.

It should be understood that combinations of the above lateral stiffness relationships may be utilized as well. The lateral stiffness of each of structural components may be readily measured as compared to film stiffness and spline stiffness which may be relatively difficult to determine.

By flex mounting to accommodate misalignment of the shafts under design loads, the FDGS design loads have been reduced by more than 17% which reduces overall engine weight. The flex mount facilitates alignment to increase system life and reliability. The lateral flexibility in the flexible support and input coupling allows the FDGS to essentially 'float' with the fan shaft during maneuvers. This allows: (a) the torque transmissions in the fan shaft, the input coupling and the flexible support to remain constant during maneuvers; (b) maneuver induced lateral loads in the fan shaft (which may otherwise potentially misalign gears and damage teeth) to be mainly reacted to through the number 1 and 1.5 bearing support K-frame; and (c) both the flexible support and the input coupling to transmit small amounts of lateral loads into the FDGS. The splines, gear tooth stiffness, journal bearings, and ring gear ligaments are specifically designed to minimize gear tooth stress variations during maneuvers. The other connections to the FDGS are flexible mounts (turbine coupling, case flex mount). These mount spring rates have been determined from analysis and proven in rig and flight testing to isolate the gears from engine maneuver loads. In addition, the planet journal bearing spring rate may also be controlled to support system flexibility.

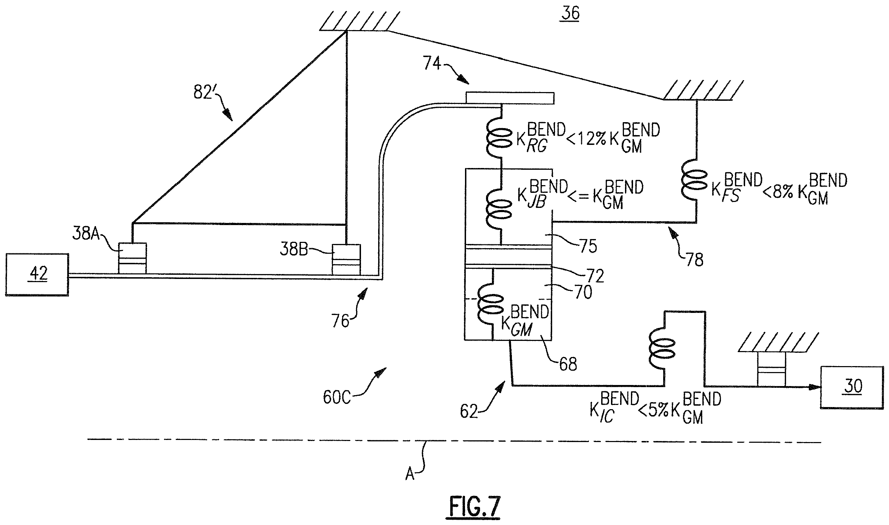

Figure 7 is similar to Figure 5 but shows the transverse stiffness relationships within the FDGS 60C (for a star system architecture). The transverse stiffness (KIC$^{BEND}$) of the input coupling 62, a transverse stiffness (KFS$^{BEND}$) of the flexible support 78, a transverse stiffness (KRG$^{BEND}$) of the ring gear 74 and a transverse stiffness (KJB$^{BEND}$) of the planet journal bearing 75 are controlled with respect to a transverse stiffness (KGM$^{BEND}$) of the gear mesh within the FDGS 60.

In the disclosed non-limiting embodiment, the stiffness (KGM$^{BEND}$) may be defined by the gear mesh between the sun gear 68 and the multiple planet gears 70. The transverse stiffness (KGM$^{BEND}$) within the FDGS 60 is the referenced factor and the static structure 82' rigidly supports the fan shaft 76. That is, the fan shaft 76 is supported upon bearing systems 38A, 38B which are essentially rigidly supported by the static structure 82'. The transverse stiffness ($KJB^{BEND}$) may be mechanically defined by, for example, the stiffness within the planet journal bearing 75 and the transverse stiffness ($KRG^{BEND}$) of the ring gear 74 may be mechanically defined by, for example, the geometry of the ring gear wings 74L, 74R (Figure 2).

In the disclosed non-limiting embodiment, the transverse stiffness ($KRG^{BEND}$) of the ring gear 74 is less than about 12% of the transverse stiffness ($KGM^{BEND}$) of the gear mesh; the transverse stiffness ($KFS^{BEND}$) of the flexible support 78 is less than about 8% of the transverse stiffness ($KGM^{BEND}$) of the gear mesh; the transverse stiffness ($KJB^{BEND}$) of the planet journal bearing 75 is less than or equal to the transverse stiffness ($KGM^{BEND}$) of the gear mesh; and the transverse stiffness ($KIC^{BEND}$) of an input coupling 62 is less than about 5% of the transverse stiffness ($KGM^{BEND}$) of the gear mesh.

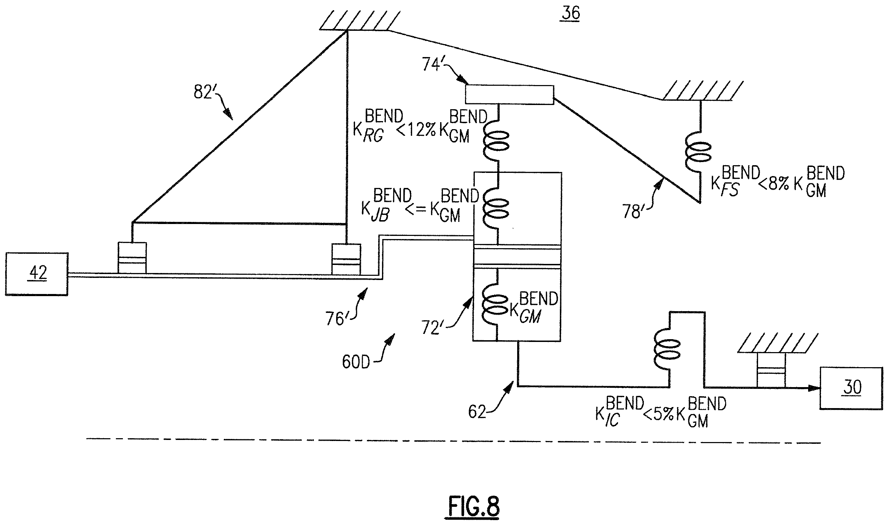

Figure 8 is similar to Figure 6 but shows the transverse stiffness relationship within the FDGS 60D for the planetary gear system architecture.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The combined arrangement of the high power density and fan drive turbine with the high $AN^2$ performance quantity, all incorporated with the flexible mounting structure, provide a very robust and efficient gas turbine engine.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

**Claims**

1. A method of operating a gas turbine engine (20) comprising a fan shaft (76), a frame (82) which supports said fan shaft (30), said frame (82) defines at least one of a frame lateral stiffness and a frame transverse stiffness, a gear system (60), having a plurality of gears, which drives said fan shaft (30), a flexible support (78) which at least partially supports said gear system (48), wherein said flexible support (78) defines at least one of a flexible support lateral stiffness with respect to said frame lateral stiffness and a flexible support transverse stiffness with respect to said frame transverse stiffness, an input coupling (62) to said gear system (60), said input coupling (62) defines at least one of an input coupling lateral stiffness with respect to said frame lateral stiffness and an input coupling transverse stiffness with respect to said frame transverse stiffness, a first spool (30), a second spool (32), a first turbine section (46) configured to drive said first spool (30) to provide a drive input into said plurality of gears and a second turbine section (54) configured to drive said second spool (32), wherein said first turbine section (46) has a first exit area (400) at a first exit point, said first spool (30) is configured to rotate at a first speed, said second turbine section (54) has a second exit area (401) at a second exit point, said second spool (32) is configured to rotate at a second speed, which is faster than the first speed, a first performance quantity is defined as the product of the first speed squared and the first exit area (400), a second performance quantity is defined as the product of the second speed squared and the second exit area (401), **characterised in that** the method comprising:

   operating the engine such that:

      a first ratio of the first performance quantity to the second performance quantity is equal to 0.8 or between 0.8 and 1.5; and
      a second ratio of a thrust provided by said engine (20) to a volume of a turbine section (28) including both said first turbine section (46) and said second turbine section (54), is greater than or equal to 1.5 lbf/inch$^3$ (407.1 kN/m$^3$) and less than or equal to 5.5 lbf/inch$^3$ (1,493 kN/m$^3$), wherein said thrust is sea level take-off, flat-rated static thrust.

2. The method as set forth in claim 1, wherein said first ratio is above or equal to 1.0.

3. The method as set forth m claim 1 or 2, wherein said second ratio is greater than or equal to 2.0 lbf/inch$^3$ (542.9 kN/m$^3$).

4. The method as set forth in claim 1 or 2, wherein said second ratio is or greater than or equal to 4.0 lbf/inch$^3$ (1086 kN/m$^3$).

5. The method as set forth in any preceding claim, wherein said first turbine section (46) has at least three stages (46A, 46B, 46C).

6. The method as set forth in any preceding claim, wherein said first turbine section (46) has up to six stages (46A, 46B, 46C).

7. The method as set forth in any preceding claim, wherein said second turbine section (54) has two stages.

8. The method as set forth in any preceding claim, wherein a pressure ratio across the first turbine section (46) is greater than 5:1.

9. The method as set forth in any preceding claim, wherein said frame (82) defines a frame lateral stiffness and a frame transverse stiffness, and said flexible support (78) defines a flexible support transverse stiffness and a flexible support lateral stiffness, and said flexible support lateral stiffness is less than said frame lateral stiffness and said flexible support transverse stiffness is less than said frame transverse stiffness.

10. The method as set forth in any preceding claim, wherein said inlet coupling (62) defines an input coupling lateral stiffness and an input coupling transverse stiffness, and said input coupling lateral stiffness is less than said frame lateral stiffness, and said input coupling transverse stiffness is less than said frame transverse stiffness.

11. The method as set forth in any preceding claim, wherein said plurality of gears (48) include a gear mesh that defines a gear mesh lateral stiffness and a gear mesh transverse stiffness, said gear mesh lateral stiffness is greater than said flexible support lateral stiffness, and said gear mesh transverse stiffness is greater than said flexible support transverse stiffness.

12. The method as set forth in any preceding claim, wherein the first turbine section (46) is a low pressure turbine section and the second turbine section (54) is a high pressure turbine section.

**Patentansprüche**

1. Verfahren zum Betreiben eines Gasturbinentriebwerks (20), umfassend eine Bläserwelle (76), einen Rahmen (82), welcher die Bläserwelle (30) trägt, wobei der Rahmen (82) mindestens eine von einer Seitensteifigkeit eines Rahmens und einer Quersteifigkeit eines Rahmens definiert, ein Getriebesystem (60), das eine Vielzahl von Getrieben aufweist, welches die Bläserwelle (30) antreibt, einen flexiblen Träger (78), der zumindest teilweise das Getriebesystem (48) trägt, wobei der flexible Träger (78) mindestens eine von einer Seitensteifigkeit eines flexiblen Trägers in Bezug auf die Seitensteifigkeit des Rahmens und einer Quersteifigkeit eines flexiblen Trägers in Bezug auf die Quersteifigkeit des Rahmens definiert, eine Eingangskopplung (62) zu dem Getriebesystem (60), wobei die Eingangskopplung (62) mindestens eine von einer Seitensteifigkeit einer Eingangskopplung in Bezug auf die Seitensteifigkeit des Rahmens und einer Quersteifigkeit einer Eingangskopplung in Bezug auf die Quersteifigkeit des Rahmens definiert, eine erste Spule (30), eine zweite Spule (32), einen ersten Turbinenabschnitt (46), der konfiguriert ist, um die erste Spule (30) anzutreiben, um einen Antriebseingang zu der Vielzahl von Getrieben bereitzustellen, und einen zweiten Turbinenabschnitt (54), der konfiguriert ist, um die zweite Spule (32) anzutreiben, wobei der erste Turbinenabschnitt (46) an einem ersten Austrittspunkt einen ersten Austrittsbereich (400) aufweist, die erste Spule (30) konfiguriert ist, um sich mit einer ersten Drehzahl zu drehen, der zweite Turbinenabschnitt (54) an einem zweiten Austrittspunkt einen zweiten Austrittsbereich (401) aufweist, die zweite Spule (32) konfiguriert ist, um sich mit einer zweiten Drehzahl zu drehen, die schneller ist als die erste Drehzahl, eine erste Betriebsgröße als das Produkt der ersten Drehzahl hoch zwei und des ersten Austrittsbereichs (400) definiert wird, eine zweite Betriebsgröße als das Produkt der zweiten Drehzahl hoch zwei und des zweiten Austrittsbereichs (401) definiert wird, **dadurch gekennzeichnet, dass** das Verfahren Folgendes umfasst:

Betreiben des Triebwerks, sodass:

ein erstes Verhältnis der ersten Betriebsgröße zu der zweiten Betriebsgröße gleich 0,8 ist oder zwischen 0,8 und 1,5 liegt; und

ein zweites Verhältnis eines Schubs, der von dem Triebwerk (20) für ein Volumen eines Turbinenabschnitts (28), einschließend sowohl den ersten Turbinenabschnitt (46) als auch den zweiten Turbinenabschnitt (54), bereitgestellt wird, größer oder gleich 1,5 Pfd/Zoll$^3$ (407,1 kN/m$^3$) und kleiner oder gleich 5,5 Pfd/Zoll$^3$ (1,493 kN/m$^3$) ist, wobei der Schub ein Flat-Rated-Standschub beim Abheben auf Höhe des Meeresspiegels ist.

2. Verfahren nach Anspruch 1, wobei das erste Verhältnis größer oder gleich 1,0 ist.

3. Verfahren nach Anspruch 1 oder 2, wobei das zweite Verhältnis größer oder gleich 2,0 Pfd/Zoll$^3$ (542,9 kN/m$^3$) ist.

4. Verfahren nach Anspruch 1 oder 2, wobei das zweite Verhältnis größer oder gleich 4,0 Pfd/Zoll$^3$ (1086 kN/m$^3$) ist.

5. Verfahren nach einem der vorhergehenden Ansprüche, wobei der erste Turbinenabschnitt (46) mindestens drei Stufen (46A, 46B, 46C) aufweist.

6. Verfahren nach einem der vorhergehenden Ansprüche, wobei der erste Turbinenabschnitt (46) bis zu sechs Stufen (46A, 46B, 46C) aufweist.

7. Verfahren nach einem der vorhergehenden Ansprüche, wobei der zweite Turbinenabschnitt (54) zwei Stufen aufweist.

8. Verfahren nach einem der vorhergehenden Ansprüche, wobei ein Druckverhältnis durch den ersten Turbinenabschnitt (46) größer ist als 5:1.

9. Verfahren nach einem der vorhergehenden Ansprüche, wobei der Rahmen (82) eine Seitensteifigkeit eines Rahmens und eine Quersteifigkeit eines Rahmens definiert, und der flexible Träger (78) eine Quersteifigkeit eines flexiblen Trägers und eine Seitensteifigkeit eines flexiblen Trägers definiert, und die Seitensteifigkeit des flexiblen Trägers kleiner ist als die Seitensteifigkeit des Rahmens und die Quersteifigkeit des flexiblen Trägers kleiner ist als die Quersteifigkeit des Rahmens.

10. Verfahren nach einem der vorhergehenden Ansprüche, wobei die Eingangskopplung (62) eine Seitensteifigkeit einer Eingangskopplung und eine Quersteifigkeit einer Eingangskopplung definiert, und die Seitensteifigkeit der Eingangskopplung kleiner ist als die Seitensteifigkeit des Rahmens, und die Quersteifigkeit der Eingangskopplung kleiner ist als die Quersteifigkeit des Rahmens.

11. Verfahren nach einem der vorhergehenden Ansprüche, wobei die Vielzahl von Getrieben (48) einen Zahneingriff einschließt, der eine Seitensteifigkeit eines Zahneingriffes und eine Quersteifigkeit eines Zahneingriffes definiert, wobei die Seitensteifigkeit des Zahneingriffes größer ist als die Seitensteifigkeit des flexiblen Trägers, und die Quersteifigkeit des Zahneingriffes größer ist als die Quersteifigkeit des flexiblen Trägers.

12. Verfahren nach einem der vorhergehenden Ansprüche, wobei der erste Turbinenabschnitt (46) ein Niederdruckturbinenabschnitt ist und der zweite Turbinenabschnitt (54) ein Hochdruckturbinenabschnitt ist.

**Revendications**

1. Procédé de fonctionnement d'un moteur de turbine à gaz (20) comprenant un arbre de soufflante (76), un cadre (82) qui supporte ledit arbre de soufflante (30), ledit cadre (82) définissant au moins une parmi une rigidité latérale de cadre et une rigidité transversale de cadre, un système d'engrenage (60), ayant une pluralité d'engrenages, qui entraîne ledit arbre de soufflante (30), un support flexible (78) qui supporte au moins en partie ledit système d'engrenage (48), dans lequel ledit support flexible (78) définit au moins une d'une rigidité latérale de support flexible par rapport à ladite rigidité latérale de cadre et d'une rigidité transversale de support flexible par rapport à ladite rigidité transversale de cadre, un couplage d'entrée (62) audit système d'engrenage (60), ledit couplage d'entrée (62) définissant au moins une d'une rigidité latérale de couplage d'entrée par rapport à ladite rigidité latérale de cadre et d'une rigidité transversale de couplage d'entrée par rapport à ladite rigidité transversale de cadre, une première bobine (30), une seconde bobine (32), une première section de turbine (46) configurée pour entraîner ladite première bobine (30) pour fournir une entrée d'entraînement dans ladite pluralité d'engrenages, et une seconde section de turbine (54) configurée pour entraîner ladite seconde bobine (32), dans lequel ladite première section de turbine (46) a une première surface de sortie (400) au niveau d'un premier point de sortie, ladite première bobine (30) est configurée pour tourner à une première vitesse, ladite seconde section de turbine (54) a une seconde surface de sortie (401) au niveau d'un second point de sortie, ladite seconde bobine (32) est configurée pour tourner à une seconde vitesse, qui est plus rapide que la première vitesse, une première quantité de performance est définie comme le produit de la première vitesse au carré et de la première surface de sortie (400), une seconde quantité de performance est définie comme le produit d'une seconde vitesse au carré et de la seconde surface de sortie (401), **caractérisé en ce que** le procédé comprend :

le fonctionnement du moteur de telle sorte :

qu'un premier rapport de la première quantité de performance sur la seconde quantité de performance est égal à 0,8 ou est compris entre 0,8 et 1,5 ; et

qu'un second rapport d'une poussée fournie par ledit moteur (20) sur un volume d'une section de turbine (28) comprenant à la fois ladite première section de turbine (46) et ladite seconde section de turbine (54), est supérieur ou égal à 1,5 lbf/pouce$^3$ (407,1 kN/m$^3$) et inférieur ou égal à 5,5 lbf/pouce$^3$ (1,493 kN/m$^3$), dans lequel ladite poussée est une poussée statique fixe de décollage au niveau de la mer.

2. Procédé selon la revendication 1, dans lequel ledit premier rapport est supérieur ou égal à 1,0.

3. Procédé selon la revendication 1 ou 2, dans lequel ledit second rapport est supérieur ou égal à 2,0 lbf/pouce$^3$ (542,9 kN/m$^3$).

4. Procédé selon la revendication 1 ou 2, dans lequel ledit second rapport est supérieur ou égal à 4,0 lbf/pouce$^3$ (1 086 kN/m$^3$).

5. Procédé selon l'une quelconque des revendications précédentes, dans lequel ladite première section de turbine (46) a au moins trois stades (46A, 46B, 46C).

6. Procédé selon l'une quelconque des revendications précédentes, dans lequel ladite première section de turbine (46) a au moins six stades (46A, 46B, 46C).

7. Procédé selon l'une quelconque des revendications précédentes, dans lequel ladite seconde section de turbine (54) a deux stades.

8. Procédé selon l'une quelconque des revendications précédentes, dans lequel un rapport de pression au travers de la première section de turbine (46) est supérieur à 5:1.

9. Procédé selon l'une quelconque des revendications précédentes, dans lequel ledit cadre (82) définit une rigidité latérale de cadre et une rigidité transversale de cadre, et ledit support flexible (78) définit une rigidité transversale de support flexible et une rigidité latérale de support flexible, et ladite rigidité latérale de support flexible est inférieure à ladite rigidité latérale de cadre et ladite rigidité transversale de support flexible est inférieure à ladite rigidité transversale de cadre.

10. Procédé selon l'une quelconque des revendications précédentes, dans lequel ledit couplage d'entrée (62) définit une rigidité latérale de couplage d'entrée et une rigidité transversale de couplage d'entrée, et ladite rigidité latérale de couplage d'entrée est inférieure à ladite rigidité latérale de cadre, et ladite rigidité transversale de couplage d'entrée est inférieure à ladite rigidité transversale de cadre.

11. Procédé selon l'une quelconque des revendications précédentes, dans lequel ladite pluralité d'engrenages (48) comprend un maillage d'engrenage qui définit une rigidité latérale de maillage d'engrenage et une rigidité transversale de maillage d'engrenage, ladite rigidité latérale de maillage d'engrenage étant supérieure à ladite rigidité latérale de support flexible, et ladite rigidité transversale de maillage d'engrenage étant supérieure à ladite rigidité transversale de support flexible.

12. Procédé selon l'une quelconque des revendications précédentes, dans lequel la première section de turbine (46) est une section de turbine basse pression et la seconde section de turbine (54) est une section de turbine haute pression.

FIG.1A

FIG.1B

FIG.1C

FIG.1D

FIG.2

EP 2 949 882 B1

$K_{FRAME}^{BEND}$    $K_{FRAME}$

36

82

38A

42

38B

76

60A

A

74

$K_{FS}^{BEND} < 11\% \, K_{FRAME}^{BEND}$

$K_{FS} < 11\% \, K_{FRAME}$

70

72

P

75

78

68

$K_{IC}^{BEND} < 11\% \, K_{FRAME}^{BEND}$

$K_{IC} < 11\% \, K_{FRAME}$

62

38C

30

FIG.3

FIG.4

EP 2 949 882 B1

EP 2 949 882 B1

$K_{RG} < 12\% K_{GM}$

$K_{JB} <= K_{GM}$

$K_{FS} < 8\% K_{GM}$

$K_{GM}$

$K_{IC} < 5\% K_{GM}$

**FIG.5**

$K_{RG} < 12\% K_{GM}$

$K_{JB} <= K_{GM}$

$K_{FS} < 8\% K_{GM}$

$K_{GM}$

$K_{IC} < 5\% K_{GM}$

**FIG.6**

EP 2 949 882 B1

$$K_{RG}^{BEND} < 12\% K_{GM}^{BEND}$$

$$K_{JB}^{BEND} <= K_{GM}^{BEND}$$

$$K_{FS}^{BEND} < 8\% K_{GM}^{BEND}$$

$$K_{GM}^{BEND}$$

$$K_{IC}^{BEND} < 5\% K_{GM}^{BEND}$$

FIG.7

EP 2 949 882 B1

$$K_{RG}^{BEND} < 12\% K_{GM}^{BEND}$$

$$K_{JB}^{BEND} <= K_{GM}^{BEND}$$

$$K_{FS}^{BEND} < 8\% K_{GM}^{BEND}$$

$$K_{GM}^{BEND}$$

$$K_{IC}^{BEND} < 5\% K_{GM}^{BEND}$$

FIG.8

**EP 2 949 882 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2532841 A
- US 290667 A
- US 7338259 B
- US 7871247 B